# EUROPÄISCHE PATENTSCHRIFT

(11) **EP 3 804 951 B1**
(45) Veröffentlichungstag und Bekanntmachung des Hinweises auf die Patenterteilung: **09.11.2022**
(21) Anmeldenummer: 20212228.9
(22) Anmeldetag: 28.02.2019
(51) Int. Cl.: B29C 45/76

(54) **VISUALISIERUNGSVORRICHTUNG UND BEURTEILUNGSVORRICHTUNG FÜR EINE PRODUKTIONSANLAGE, DIE MINDESTENS EINE ZYKLISCH ARBEITENDE FORMGEBUNGSMASCHINE ENTHÄLT**
VISUALIZATION DEVICE AND EVALUATION DEVICE FOR A PRODUCTION LINE COMPRISING AT LEAST ONE CYCLICALLY OPERATING MOLDING MACHINE
DISPOSITIF DE VISUALISATION ET DISPOSITIF D'ÉVALUATION POUR UNE LIGNE DE PRODUCTION COMPRENANT AU MOINS UNE MACHINE À MOULAGE FONCTIONNANT DE MANIÈRE CYCLIQUE

(30) Priorität: 02.03.2018 AT 501792018
(43) Veröffentlichungstag der Anmeldung: 14.04.2021
(62) Teilanmeldung aus: 19710578.6
(73) Patentinhaber: ENGEL AUSTRIA GmbH, 4311 Schwertberg (AT)
(72) Erfinder: GIESSAUF, Josef, 4320 Perg (AT)
(74) Vertreter: Torggler & Hofmann Patentanwälte - Innsbruck

(56) Entgegenhaltungen:
- US-A1- 2005 188 376
- US-A1- 2006 247 822
- US-A1- 2016 114 514

## Beschreibung

Die Erfindung betrifft eine Visualisierungsvorrichtung für eine Produktionsanlage mit den Merkmalen des Oberbegriffs des Anspruchs 1, eine Beurteilungsvorrichtung für eine Produktionsanlage mit den Merkmalen des Oberbegriffs des Anspruchs 3 und eine Produktionsanlage mit einer solchen Visualisierungs- und/oder Beurteilungsvorrichtung.

Aktuell bieten Visualisierungsvorrichtungen und Beurteilungsvorrichtungen für gattungsgemäße Produktionsanlagen die Möglichkeit, hunderte aus Messwerten ermittelte Prozessgrößen in Form von Kennzahlen darzustellen und/oder zu überwachen.

Solche Kennzahlen können beispielsweise Minima, Maxima, Mittelwerte oder Integrale von Messkurven, die innerhalb eines zyklischen Produkt ionsprozesses (Produktionszyklus) aufgezeichnet wurden, sein.

Typischerweise liegen solche Kurven als Funktion der Zeit vor. Weitere Kennzahlen können auch Zeitpunkte (ab dem Start der Messung) sein, zu denen die Kurve eine bestimmte Eigenschaft annimmt, also Zeitpunkt des Maximums/Minimums; Zeitpunkt, bei dem das Integral einen bestimmten Wert überschreitet, Zeitpunkt, an dem ein definierter Wert erreicht, überschritten oder unterschritten wird, usw.

Auch aus der Kombination von Messungen mit verschiedenen Sensoren können Kennzahlen abgeleitet werden. Werden z. B. bei einer Kunststoff-Spritzgießmaschine beim Einspritzen die Schneckenposition, der Spritzdruck und der Forminnendruck gemessen, so können über den verbindenden Parameter "Zeit" Kennzahlen wie die Schneckenposition, an der der maximale Spritzdruck erreicht wird, der Forminnendruck bei vorderster Schneckenposition o. ä. bestimmt werden.

Für Kennzahlen gibt es zunächst (anders als bei Istwerten, für die es üblicherweise einen zugeordneten Sollwert gibt) keinen Erwartungswert, sie ergeben sich oft aus mehreren Faktoren. Als Beispiel sei der maximale Spritzdruck bei einer Kunststoff-Spritzgießmaschine genannt, der sich u. a. aus Einspritzgeschwindigkeit, Geometrie des Formhohlraums, Schmelzeviskosität und Werkzeugtemperatur ergibt. Gerade deshalb sind diese Größen so interessant, da mit ihnen auf nicht messbare oder nicht direkt gemessene Einflussgrößen oder deren Veränderung rückgeschlossen werden kann.

Sollwerte sind Einstellgrößen für die Produktionsanlage, die vom Bediener, von einer Simulationssoftware, von einem Einstellassistenten oder einem Prozessoptimierungssystem vorgegeben werden. Typischerweise handelt es sich um numerische Werte (z. B. Solltemperaturen, -positionen, - geschwindigkeiten), um Boole´sche Werte (ein/aus), Zeichenketten oder die getroffene Auswahl aus einer Liste.

Eine gattungsgemäße Visualisierungsvorrichtung für eine Produktionsanlage mit einer zyklisch arbeitenden Formgebungsmaschine in Form einer Kunststoff-Spritzgießmaschine geht aus DE 10 2007 013 044 B4 hervor. Die dort beschriebene Kunststoff-Spritzgießmaschine weist eine Maschinensteuerung auf, die derart ausgebildet ist, dass im Betriebszustand verschiedene Prozessparameter eines aktuellen Spritzgießzyklus mit den entsprechenden Prozessparametern wenigstens eines vorangegangenen Spritzgießzyklus verglichen werden, wobei aus den Änderungen der verschiedenen Prozessparameter ein Stabilitätsparameter gebildet wird und bei Überschreiten eines Schwellenwertes durch den Stabilitätsparameters ein Warnsignal an einer Anzeigevorrichtung angezeigt wird. Bevorzugt kommt ein Warnsystem durch Visualisierung einer Ampel zum Einsatz.

Nachteilig bei diesem Stand der Technik ist, dass bei Auftreten von Problemen eine Klärung, worin die Ursache des Problems liegt, schwierig ist.

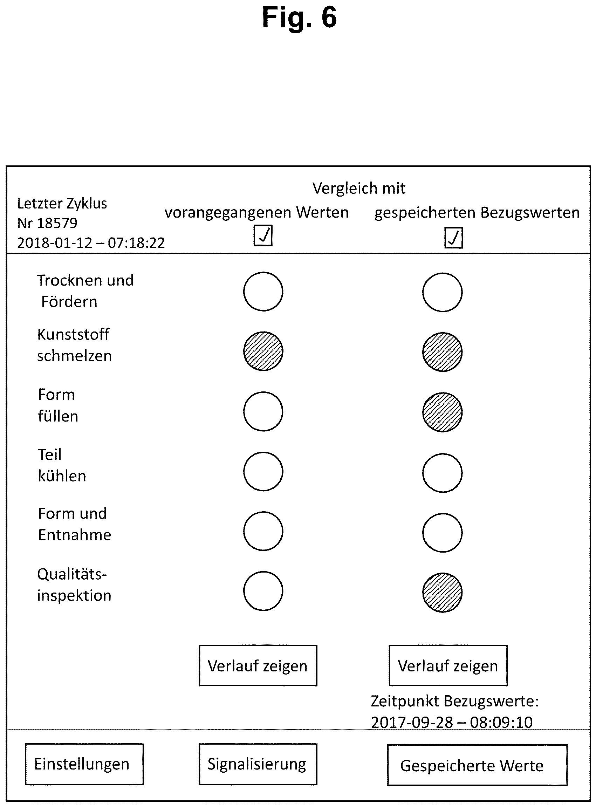

US 2004/148136 A1 lehrt die Visualisierung von Daten für einen Produktionsstandort mittels einer Vielzahl von logischen Gruppen (vgl. Fig. 6 dieser Schrift), wobei jede logische Gruppe eine Produktionsanlage enthält. Eine Visualisierung oder Beurteilung von Daten der Bestandteile der Produktionsanlagen (zyklisch arbeitende Formgebungsmaschine und Peripheriegeräte) ist nicht möglich.

Weitere Visualisierungsvorrichtungen für Daten von Produktionsanlagen gehen aus dem Stand der Technik durch die Schriften US 2005/188376 A1 sowie US 2016/114514 A1 hervor.

Aufgabe der Erfindung ist die Bereitstellung eines einer Visualisierungsvorrichtung, einer Beurteilungsvorrichtung und/oder einer Produktionsanlage, bei welchen besser beurteilt werden kann und/oder für einen Bediener leichter nachvollziehbar ist, was die Ursache eines Problems ist.

Diese Aufgabe wird durch eine Visualisierungsvorrichtung mit den Merkmalen des Anspruchs 1, eine Beurteilungsvorrichtung mit den Merkmalen des Anspruchs 3 und eine Produktionsanlage mit einer solchen Visualisierungs- und/oder Beurteilungsvorrichtung gelöst. Vorteilhafte Ausführungsformen der Erfindung sind in den abhängigen Ansprüchen definiert.

Es wird die einfache Visualisierung und/oder Beurteilung von Prozessgrößen einer Produktionsanlage durch einen Bediener oder durch eine Recheneinheit gestattet, wobei die Produktionsanlage in einer minimalen Konfiguration nur die zyklisch arbeitende Formgebungsmaschine enthält, jedoch in der Praxis meist noch der Formgebungsmaschine vor- und nachgeschaltete oder parallellaufende Maschinen, Vorrichtungen und Geräte (allgemein: Peripheriegeräte) vorgesehen sind. Die werkseitig voreingestellte Zuordnung von Prozessgrößen zu bestimmten logischen Gruppen liefert dem Fachmann bereits Hinweise auf die Ursache von Veränderungen, was wiederum die Fehlerbehebung erleichtert.

Besonders bevorzugt ist die Visualisierungsvorrichtung oder die Beurteilungsvorrichtung zum Visualisieren oder Beurteilen eines Prozesszustandes der Produktionsanlage zur Durchführung eines Verfahrens zum Beurteilen und Visualisieren eines Prozesszustandes einer Produktionsanlage vorgesehen, die mindestens eine zyklisch arbeitende Formgebungsmaschine enthält, wobei zeitkontinuierlich oder zeitdiskret der Wert einer Vielzahl von ausgewählten Prozessgrößen ermittelt wird und der jeweils aktuelle Wert jeder ausgewählten Prozessgröße oder eine daraus abgeleitete Größe durch eine Recheneinheit mit einem oder mehreren Referenzwerten verglichen und eine Abweichung oder eine Änderungsrate bestimmt wird, wobei jede ausgewählte Prozessgröße durch die Recheneinheit wenigstens einer logischen Gruppe zugeordnet wird, wobei zumindest zwei verschiedene logische Gruppen vorgesehen werden, und dass gegebenenfalls logische Gruppen in wenigstens zwei Hierarchieebenen angeordnet werden, derart, dass zumindest eine logische Gruppe einer niedrigeren Hierarchieebene einer anderen logischen Gruppe einer höheren Hierarchieebene zugeordnet ist, und dass für jede logische Gruppe durch die Recheneinheit ein Zustand der logischen Gruppe auf Basis der dieser logischen Gruppe zugeordneten Prozessgrößen beurteilt und/oder mittels einer Anzeigevorrichtung visualisiert wird.

Es kann vorgesehen sein, die logischen Gruppen nach zumindest einem der in nachstehender Liste angeführten Kriterien gebildet werden:
- Anlagenbereich oder Komponente der Produktionsanlage (z. B. Schließeinheit, Spritzeinheit, Werkzeug, Rückstromsperre usw.)
- Ablaufschritt oder Zustand eines Produktionsprozesses
- Eigenschaften einer von der Formgebungsmaschine verarbeiteten Formmasse
- Eigenschaften eines von der Formgebungsmaschine produzierten Formteils
- mögliche Störungen oder Fehler im Produktionsprozess
- Vorliegen eines gewünschten Zustands (z. B. "Schließverhalten der Sperre ist in Ordnung")
- Produktivität und Wirtschaftlichkeit der Produktionsanlage oder des Produktionsprozesses oder von Teilen davon
- Umgebungsbedingungen der Produktionsanlage oder des Produktionsprozesses oder von Teilen davon

Die Gruppierung in logische Gruppen kann beispielsweise vorgenommen werden nach:
- Prozessschritten des Produktionszyklus
- Funktionseinheiten der Produktionsanlage, im Speziellen der Formgebungsmaschine
- physikalischen Größen des Produktionsprozesses oder in Bezug auf den Produktionsprozess vorbereitenden Maßnahmen (z. B. Vorheizen von Komponenten der Formgebungsmaschine)

Speziell angepasst an eine Kunststoff-Spritzgießmaschine können die logischen Gruppen in Bezug auf Prozessschritte, Funktionseinheiten oder physikalische Größen wie folgt gebildet werden oder vorgesehen sein:
Die logischen Gruppen in Bezug auf Prozessschritte des Produktionszyklus können sein (einzeln oder in beliebiger Kombination):
- logische Gruppe in Bezug auf den Prozessschritt "Trocknen und Fördern von Kunststoffmaterial in wenigstens eine Plastifiziereinheit der Kunststoff-Spritzgießmaschine", z. B. bezeichnet als "Trocknen und Fördern"
- logische Gruppe in Bezug auf den Prozessschritt "Plastifizieren des geförderten Kunststoffmaterials in der wenigstens einen Plastifiziereinheit der Kunststoff-Spritzgießmaschine", z. B. bezeichnet als "Kunststoff schmelzen"
- logische Gruppe in Bezug auf den Prozessschritt "Einspritzen des plastifizierten Kunststoffmaterials in zumindest eine Kavität der Kunststoff-Spritzgießmaschine", z. B. bezeichnet als "Form füllen"
- logische Gruppe in Bezug auf den Prozessschritt "Kühlen und Entnehmen und/oder Auswerfen des durch Erstarren des in die zumindest eine Kavität eingespritzten, plastifizierten Kunststoffmaterials entstandenen Formteils", z. B. bezeichnet als "Form und Entnahme"
- logische Gruppe in Bezug auf den Prozessschritt "Schließen und Öffnen von wenigstens zwei an Formaufspannplatten befestigten Formwerkzeugteilen der Kunststoff-Spritzgießmaschine, durch welche die zumindest eine Kavität ausbildbar ist", z. B. bezeichnet als "Schließen und Öffnen"

Die logische Gruppe "Trocknen und Fördern" kann beispielsweise die Prozessgrößen "Temperatur des Kunststoffmaterials", "Feuchtigkeitsgehalt des Kunststoffmaterials" beinhalten.

Die logische Gruppe "Kunststoff schmelzen" kann beispielsweise die Prozessgrößen "Temperatur des plastifizierten Kunststoffmaterials", "Leistung einer Temperiervorrichtung der Plastifiziereinheit", "Staudruck im Schneckenvorraum der Plastifizierschnecke", "Drehzahl und/oder Drehmoment der Plastifizierschnecke" beinhalten.

Die logische Gruppe "Form füllen" kann beispielsweise die Prozessgrößen "Einspritzdruck", "Schneckenvorschubgeschwindigkeit der Plastifizierschnecke" beinhalten.

Die logische Gruppe "Form und Entnahme" kann beispielsweise die Prozessgrößen "Werkzeuginnendruck", "Werkzeugtemperatur", "Heißkanaltemperatur", "Leistung einer Temperiervorrichtung des Formwerkzeugs" beinhalten.

Die logische Gruppe "Schließen und Öffnen" kann beispielsweise die Prozessgrößen "Schließkraft, mit welcher die Formwerkzeugteile über die Formaufspannplatten während des Einspritzens aneinander pressbar sind", "Schließkraftverteilung", "Aufreißkraft, mit welcher die Formwerkzeugteile nach dem Erstarren des Formteils auseinander gefahren werden", "Prägehub bei Einsatz eines Prägewerkzeugs" beinhalten.

Die logischen Gruppen in Bezug auf Funktionseinheiten der Produktionsanlage können sein (einzeln oder in beliebiger Kombination):
- logische Gruppe in Bezug auf "Kunststoff-Spritzgießmaschine"
- logische Gruppe in Bezug auf "Schließeinheit der Kunststoff-Spritzgießmaschine"
- logische Gruppe in Bezug auf "Spritzeinheit der Kunststoff-Spritzgießmaschine"
- logische Gruppe in Bezug auf "Eilhubvorrichtung der Schließeinheit"
- logische Gruppe in Bezug auf "Schließmechanismus der Schließeinheit"
- logische Gruppe in Bezug auf "Formwerkzeug"
- logische Gruppe in Bezug auf "Ausstoßvorrichtung des Formwerkzeugs"
- logische Gruppe in Bezug auf "Temperiervorrichtung des Formwerkzeugs"
- logische Gruppe in Bezug auf "Plastifiziereinheit der Spritzeinheit"
- logische Gruppe in Bezug auf "Dosierantrieb der Plastifiziereinheit"
- logische Gruppe in Bezug auf "Einspritzantrieb der Plastifiziereinheit"
- logische Gruppe in Bezug auf "Handlingvorrichtung für die Kunststoff-Spritzgießmaschine"

Da dem Fachmann klar ist, wie die oben in Bezug auf die logischen Gruppen für die Prozessschritte diskutierten Größen in Bezug auf die logischen Gruppen für die Funktionseinheiten zugeordnet werden können, wird auf eine entsprechende Erläuterung verzichtet.

Die logischen Gruppen in Bezug auf physikalische Größen des Produktionsprozesses können sein (einzeln oder in beliebiger Kombination):
- logische Gruppe in Bezug auf "Temperatur", "Druck", "Weg", "Volumen", "Drehzahl", "Geschwindigkeit", "Kraft", "Zeit", "Leistung", "Drehmoment", etc.

Es kann vorgesehen sein, dass jede ausgewählte Prozessgröße wenigstens einer logischen Gruppe zugeordnet wird, wobei zumindest zwei verschiedene logische Gruppen vorgesehen werden, und dass für jede logische Gruppe ein Zustand der logischen Gruppe auf Basis der dieser logischen Gruppe zugeordneten Prozessgrößen beurteilt und/oder visualisiert wird.

In Bezug auf eine erfindungsgemäße Visualisierungs- oder Beurteilungsvorrichtung ist vorgesehen, dass verschiedene logische Gruppen visualisierbar und/oder beurteilbar sind, und dass jede ausgewählte Prozessgröße zumindest einer der logischen Gruppen zugeordnet ist und für jede logische Gruppe ein Zustand der logischen Gruppe auf Basis der dieser logischen Gruppe zugeordneten Prozessgrößen visualisierbar und/oder beurteilbar ist.

Die erfindungsgemäße Visualisierungsvorrichtung oder Beurteilungsvorrichtung ist bevorzugt zur Durchführung eines Verfahrens zum Visualisieren und Beurteilen eines Prozesszustandes ausgebildet. Es sei darauf hingewiesen, dass - um die vorliegende Offenbarung knapp zu halten - die in Bezug auf das Verfahren beschriebenen Maßnahmen natürlich alle auch einzeln oder in beliebiger Kombination bei einer erfindungsgemäßen Visualisierungsvorrichtung oder Beurteilungsvorrichtung vorgesehen sein können.

Die Visualisierungsvorrichtung oder Beurteilungsvorrichtung kann als eine einzige Baueinheit vorliegen (und ist dann bevorzugt bei der Produktionsanlage angeordnet) oder in dezentralisierter Form. Im letzteren Fall können einzelne oder alle Komponenten der Visualisierungsvorrichtung oder Beurteilungsvorrichtung an unterschiedlichen Stellen fern der Produktionsanlage angeordnet sein, z. B. in Form einer Cloudlösung. Auch in diesem Fall muss die Visualisierungsvorrichtung oder Beurteilungsvorrichtung natürlich Zugriff auf die Prozessgrößen der Produktionsanlage haben, z. B. über eine Datenfernverbindung.

Die Visualisierungsvorrichtung könnte beispielsweise eine durch eine Mobile Device (Smartphone, Tablet, usw.) gebildete Anzeigevorrichtung oder eine an der Produktionsanlage angeordnete Anzeigevorrichtung, eine durch einen Server in der Cloud bereitgestellte Recheneinheit und ein Speichermedium, das in der Cloud, der Mobile Device oder der Produktionsanlage ausgebildet ist, aufweisen. Für die Beurteilungsvorrichtung gilt ähnliches.

Bevorzugt wird unter einer zyklisch arbeitenden Formgebungsmaschine im Sinne der Erfindung eine Kunststoff-Spritzgießmaschine verstanden.

Schutz wird auch begehrt für eine Produktionsanlage, die mindestens eine zyklisch arbeitende Formgebungsmaschine enthält und eine Visualisierungsvorrichtung oder Beurteilungsvorrichtung nach einer der beschriebenen Ausführungsformen aufweist oder mit einer solchen in eine Datenverbindung bringbar ist.

Jede Produktionsanlage weist also eine (bevorzugt nur eine) zyklisch arbeitende Formgebungsmaschine auf. Eine zyklisch arbeitende Formgebungsmaschine kann natürlich mehrere zyklisch arbeitende Untereinheiten, insbesondere mehrere zyklisch arbeitende Plastifizier- und/oder Einspritzeinheiten aufweisen. In diesem Fall ist unter dem Zyklus der Produktionsanlage jene Zeitspanne zu verstehen, die sich unter Berücksichtigung aller zyklisch arbeitender Untereinheiten ergibt. Optional weist die Produktionsanlage auch der Formgebungsmaschine vor- und nachgeschaltete oder parallellaufende Maschinen, Vorrichtungen und Geräte auf, die jeweils Prozessgrößen zur Verfügung stellen können und bevorzugt mit Sensoren zur Ermittlung von Messdaten ausgestattet sind. Beispiele dafür sind Geräte und Anlagen zur Versorgung der Formgebungsmaschine oder des Formgebungswerkzeugs (Kühl- und Temperiergeräte, Materialförderer, Dosier- und Mischanlagen), zur Aufbereitung des Rohmaterials (Trockner, Entstauber), Geräte zur Manipulation der Formteile (Roboter, Förderbänder, Separierweichen), Anlagen zur Qualitätsprüfung (optische Bildverarbeitung, Waagen, Messeinrichtungen), Anlagen zur Weiterver- oder -bearbeitung der Formteile oder Systeme zur Messung zusätzlicher Prozessgrößen aus dem Werkzeug (Forminnendruck, Temperatur, Werkzeugatmung oder -dehnung) oder der Umgebung.

Beispielhaft ist vorgesehen, dass als zumindest eine ausgewählte Prozessgröße ein Istwert, ein Sollwert, eine Kennzahl, ein Messwertverlauf, eine aus mehreren vorangegangenen Werten berechnete Größe wie eine Drift, eine Steigung oder eine Streuung oder ein Betriebszustand verwendet wird. Für unterschiedliche ausgewählte Prozessgrößen können unterschiedliche Beispiele verwendet werden.

Ein Referenzwert kann ein beliebiger Wert sein, der zu einem Vergleich mit einer Prozessgröße herangezogen wird. Ein bestimmter Referenzwert kann für mehrere Prozessgrößen vorgesehen sein oder es kann für jede Prozessgröße ein eigener Referenzwert vorgesehen sein. Bevorzugt ist vorgesehen, dass zumindest ein Referenzwert aus der nachstehenden Liste ausgewählt wird, wobei auch wenigstens zwei, oder sogar alle der nachstehenden Listeneinträge kombiniert werden können:
- ein oder mehrere zeitlich vorangegangene(r) Wert(e) der ausgewählten Prozessgröße, beispielsweise ein zeitlich unmittelbar vorangegangener Wert der ausgewählten Prozessgröße oder eine Drift oder Streuung
- ein vom Bediener zu einem bestimmten Zeitpunkt gespeicherter Wert der ausgewählten Prozessgröße
- ein aus mehreren Prozessgrößen berechneter Wert
- ein Sollwert für die ausgewählte Prozessgröße
- ein durch ein Expertensystem bestimmter Idealwert für die ausgewählte Prozessgröße
- eine aus dem aktuellen Wert der ausgewählten Prozessgröße und/oder aus einem oder mehreren zeitlich vorangegangenen Werten einer Prozessgröße berechnete Größe, beispielsweise Drift oder Streuung

Eine Kombination obiger Listeneinträge kann als Referenzzustand des Produktionsprozesses bezeichnet werden.

Es müssen also erfindungsgemäß nicht notwendigerweise Prozessgrößen eines aktuellen Arbeitszyklus mit denen aus vorangegangenen Arbeitszyklen verglichen werden, sondern die Prozessgrößen (die sich nicht zwingend auf einen Arbeitsprozess beziehen müssen) können auch in bestimmten Zeitabständen ermittelt werden. Dadurch können z. B. Aufheizvorgänge betrachtet werden, bei denen noch gar kein Arbeitszyklus gefahren wird. In diesem Fall wären die ermittelten Werte für Temperaturen oder Volumenströme von Temperiermedien eine geeignete Basis für Kennzahlen, die z. B. alle 10 Sekunden ermittelt werden.

Bevorzugt ist vorgesehen, dass die zeitdiskrete Ermittlung der Werte der Vielzahl von ausgewählten Prozessgrößen in einer der nachstehend angeführten Weisen erfolgt:
- für eine Abfolge zyklischer Produktionsprozesse, vorzugsweise in jedem zyklischen Produktionsprozess
- bei Auftreten eines vordefinierten Ereignisses, z. B. bei jedem Mal des Eintretens des vordefinierten Ereignisses erfolgt die Bestimmung eines neuen Werts
- in vorbestimmten Zeitabständen (z. B. alle x Sekunden ein neuer Wert)

Die im vorigen Absatz definierten Maßnahmen können auch in Bezug auf die Bestimmung der Abweichung oder Änderungsrate vorgesehen sein.

In die Beurteilung eines Prozesszustandes können folgende Fragestellungen einfließen:
- Ändern sich die Prozessgrößen gerade gegenüber der jüngeren Vergangenheit in Form von Drifts oder Sprüngen oder bleiben sie konstant?
- Haben sich Prozessgrößen seit der Festlegung der zu einem definierten Zeitpunkt gespeicherten Referenzwerte geändert?
- Wurden Prozessgrößen durch den Eingriff des Benutzers, eines Prozessreglers, eines Prozessoptimierungssystems oder durch äußere Einflüsse geändert?
- Sollen bestimmte Prozessgrößen, insbesondere Sollwerte geändert werden, da bestimmte Kennzahlen auf Basis von hinterlegtem Expertenwissen oder auf Basis eines Vergleichs mit der Vergangenheit ungünstig sind?

Die Qualität eines Produktionsprozesses (Prozessqualität) hat zunächst keinen direkten Zusammenhang mit der Qualität der hergestellten Formteile. Dennoch wird davon ausgegangen, dass eine gute Prozessqualität die Basis für eine konstante Qualität der Formteile darstellt. Durch die Beobachtung der Prozessqualität können Fehler frühzeitig erkannt werden, bei einer Verschlechterung kann eine Qualitätsprüfung der Formteile veranlasst werden, deren Ergebnis für die zukünftige Bewertung mit der konkreten Veränderung der Prozessqualität in Beziehung gebracht werden kann. Aus diesen Beziehungen kann man Zusammenhänge erlernen oder ein selbstlernendes System (Machine Learning) mit diesen Zusammenhängen als Input versorgen.

Besonders bevorzugt ist vorgesehen, dass logische Gruppen in wenigstens zwei Hierarchieebenen angeordnet werden, derart, dass zumindest eine logische Gruppe einer niedrigeren Hierarchieebene einer anderen logischen Gruppe einer höheren Hierarchieebene zugeordnet ist. Durch die Gruppierung und Kumulierung der Informationen kann das Verfahren von Produktionsanlagen (Formgebungsmaschinen inkl. Peripheriegeräte) verallgemeinert auf Produktionszellen, Produktionshallen oder -standorte skaliert werden.

Beispielsweise kann vorgesehen sein, dass
- in einer (bevorzugt obersten) Hierarchieebene die logischen Gruppen in Bezug auf Prozessschritte des Produktionszyklus gewählt sind
- in einer unteren (bevorzugt nächstunteren) Hierarchieebene die logischen Gruppen nach Funktionseinheiten der Produktionsanlage gewählt sind
- in einer weiter unteren (bevorzugt untersten) Hierarchieebene die logischen Gruppen nach physikalischen Größen gewählt sind

Die logischen Gruppen einer oberen Hierarchieebene können also logische Gruppen einer oder mehrerer unteren Hierarchieebenen beinhalten. Beispielsweise kann speziell angepasst an eine Kunststoff-Spritzgießmaschine vorgesehen sein, dass:
- eine Hierarchieebene jene logischen Gruppen beinhaltet, die in Bezug auf "Prozessschritte des Produktionszyklus" gewählt wurden
- eine untere Hierarchieebene für jede der logischen Gruppen der oberen Hierarchieebene jene logische Gruppen beinhaltet, die in Bezug auf die "Funktionseinheiten der Produktionsanlage" gewählt wurden, aber nur für jene Funktionseinheiten der Produktionsanlage, welche am jeweiligen Prozessschritt beteiligt sind
- eine weitere untere Hierarchieebene für jede der der logischen Gruppen der oberen Hierarchieebene jene logische Gruppen beinhaltet, die in Bezug auf "physikalische Größen des Produktionsprozesses" gewählt wurden, aber nur für jene physikalische Größen, die in Bezug auf die ausgewählte Funktionseinheit relevant sind

Es kann vorgesehen sein, dass, wenn die Abweichung einer Kennzahl einer Gruppe einen vorbestimmten Wert überschreitet, eine Aktion ausgelöst wird, z. B. eine Meldung an den Bediener mit Bezug auf die betroffene logische Gruppe ausgegeben wird.

Aus der Zusammenführung der Beurteilung einzelner Prozessgrößen in mehreren Hierarchie-Ebenen entsteht ein Gesamtüberblick über den Zustand des Prozesses, von dem ausgehend sich der Bediener entlang der hierarchischen Struktur in verschiedenen Ebenen bis hin zu den einzelnen Prozessgrößen die gewünschten Informationen beschaffen kann, oder die Visualisierungseinrichtung dem Bediener diese Informationen automatisch darstellt. In Bezug auf eine Beurteilung mit oder ohne Visualisierung besteht der Vorteil darin, dass automatisch durchzuführende Aktionen besser definierbar sind.

Für die Bestimmung der Abweichung oder Änderungsrate für ausgewählte Prozessgrößen können verschiedene Algorithmen verwendet werden. Beispiele:
- gleitender Mittelwert aus mehreren Werten, Filterung, Glättung
- Streuung aus mehreren Werten
- Maximum, Minimum und Zeitpunkte des Auftretens
- Mittelwert, Integral
- Median
- Berechnung der Steigung aus mehreren Werten
- Erkennen von Knicken in Signalverläufen
- Differenz eines Wertes zum Referenzwert

Die Ergebnisse der Algorithmen können mit Grenzwerten auf Relevanz geprüft werden. Diese Grenzwerte können z. B.:
(a) als Ergebnis von Expertensystemen hinterlegt sein oder
(b) aus einem selbstlernenden System gewonnen werden
(c) fix vordefiniert sein
(d) nach einer Berechnungsvorschrift auf Basis von Maschinen- oder Prozessgrößen ermittelt werden
(e) auf Erfahrungswerten beruhen
(f) durch Benutzereingabe vorgegeben werden

Numerische Beispiele für die Fälle (a) und (b):
Bei der Berechnung der Steigung eines Zylindertemperatursignals wird eine Steigung von 0,5 Kelvin/Sekunde festgestellt.
(a) Der hinterlegte Grenzwert für die Relevanz einer Zylindertemperatursteigung beträgt 0,3 Kelvin/Sekunde, somit wird die Änderungsrate als relevant eingestuft.
(b) In der laufenden Produktion wurden die aufgetretenen Änderungsraten der Temperatur gespeichert. In 99 % der beobachteten Fälle war die Änderungsrate kleiner als 0,4 Kelvin/Sekunde, somit wird der aktuell ermittelte Wert als relevant eingestuft.

In einer Ausführungsform der Erfindung werden dem Bediener Anweisungen zur Prozessoptimierung oder Fehlerbehebung gegeben. Diese können als Ergebnis eines Expertensystems hinterlegt sein. Alternativ dazu kann das Verfahren die vom Bediener gesetzten Aktionen zur Beseitigung der erkannten Abweichungen speichern, diese also erlernen und demselben Bediener oder anderen Bedienern später zur Verfügung stellen oder als Vorschlag zu Kenntnis bringen.

In einer Ausführungsform der Erfindung wird eine Prozessoptimierung oder Fehlerbehebung automatisch durchgeführt, indem selbsttätig Einstellungen (z. B. Sollwerte) des Produktionsprozesses und/oder der Produktionsanlage verändert werden und/oder die Produktion unterbrochen wird und/oder Ersatzteilbestellungen ausgelöst werden und/oder der Kundendienst verständigt wird.

Eine weitere Dimension in der Visualisierung und/oder Beurteilung kann in Form von Beobachtungsebenen eingeführt werden, wobei eine Beobachtungsebene einen Status des Prozesszustands des Produktionsprozesses und/oder der Produktionsanlage darstellt und zwar über die Grenzen der logischen Gruppen hinweg.

In einer Ausführungsform der Erfindung ist vorgesehen, dass die Bestimmung und/oder Anzeige der Abweichung oder Änderungsrate entlang von Beobachtungsebenen erfolgt. Erst wenn eine Beobachtungsebene für in Ordnung befunden wurde (die dieser Beobachtungsebene zugeordneten Prozessgrößen wurden im Hinblick auf Abweichung oder Änderungsrate in Bezug auf den zumindest einen Referenzwert als für in Ordnung befunden), erfolgt die Bestimmung und/oder Anzeige der Abweichung oder Änderungsrate in Bezug auf eine Prozessgröße einer nächsten Ebene. Geeignete Beobachtungsebenen können sein:
- Status (Sind Heizungen, Temperierkreise eingeschaltet?)
- Plausibilität von Istwerten (Werden sinnvolle Werte geliefert? Wenn nicht, könnte ein Sensor defekt sein.)
- Sind (geregelte) Istwerte eingeschwungen, also nahe am zugehörigen Sollwert?
- Sind Kennzahlen eingeschwungen?
- Sind Kennzahlen ähnlich wie im Referenzzustand?
- Einstellungsqualität (Liegen auf Expertensystemen basierte Vorschläge zur Verbesserung der Prozessqualität durch Änderung von Sollwerten vor?)

Daneben kann es auch Beobachtungsebenen geben, in Bezug auf welche die Bestimmung und/oder Anzeige der Abweichung oder Änderungsrate in Bezug auf eine Prozessgröße erfolgt, unabhängig davon, wie höher oder niedriger geordnete Beobachtungsebenen beurteilt werden.

Bevorzugt ist vorgesehen, dass die Ergebnisse der Bestimmung der Abweichung oder Änderungsrate an einer Anzeigevorrichtung, z. B. einem Display an der Produktionsanlage, einem Mobile Device oder einem Produktionsleitsystem zur Verfügung gestellt und dort weiterverarbeitet und/oder visualisiert werden.

Bevorzugt ist vorgesehen, dass die Gesamtübersicht des Prozesszustandes Absprungpunkte zu thematisch zugeordneten Bildschirmseiten der Steuerung, des Produktionsleitsystems, des Mobile Device, etc. enthält. Absprungpunkte sind Verknüfungen, die einen schnellen Wechsel zwischen Bildschirmseiten ermöglichen ("Springen"). Es ist ebenfalls bevorzugt vorgesehen, dass die logischen Gruppen einer Hierarchieebene so gewählt sind, dass jeder logischen Gruppe eine mittels der Anzeigevorrichtung visualisierbare Bildschirmseite zuordenbar ist. Dies ist beispielsweise bei der oben beschriebenen logischen Gruppe "Funktionseinheiten der Produktionsanlage" gegeben, wenn die mittels der Anzeigevorrichtung visualisierbaren Bilschirmseiten entsprechend den Funktionseinheiten gegliedert sind (z.B. Bildschirmseiten "Einspritzen", "Dosieren", "Massezylinderheizung", "Form öffnen", etc.). Alternativ zum "Springen" zu verknüpften Ansichten ist es natürlich auch möglich, die in der jeweiligen Situation relevanten Detailinformationen in die Übersichtsansicht zu integrieren.

Bevorzugt ist vorgesehen, dass automatisch beurteilt wird, ob in Bezug auf die ausgewählte Prozessgröße im aktuellen Zustand ein Referenzwert vom Bediener geschrieben werden darf. Dies kann davon abhängig gemacht werden, bis zu welcher Beobachtungsebene die logischen Gruppen für in Ordnung befunden worden sind. Dies kann für alle logischen Gruppen gelten oder nur für jene, die von einem bestimmten Referenzwert betroffen sind.

Bevorzugt ist vorgesehen, dass je nach momentaner Situation der Produktionsanlage (z. B. Formgebungsmaschine bereit für Produktionsstart, Produktionsstart, Formteile bereit zur Verwendung usw.) unterschiedliche Referenzwerte und/oder Relevanzwerte verwendet werden.

Es kann vorgesehen sein, dass dem Bediener bei vorbestimmten Abweichungen oder Änderungsraten vorzunehmende Aktionen vorgeschlagen oder gleich automatisch ausgeführt werden. Die produzierten Formteile können als Ausschuss gewertet werden.

Es kann vorgesehen sein, dass der Benutzer eine Signalisierung (Alarmmeldung, Alarmlampe, SMS, e-mail, etc.) auswählen kann, für den Fall, dass zukünftig eine Prozessveränderung festgestellt wird.

Es kann vorgesehen sein, dass die Beurteilung und/oder Visualisierung von Prozessveränderungen eines letzten Zyklus des Produktionsprozesses gegenüber einem oder mehreren vorangegangenen Zyklus bzw. Zyklen des Produktionsprozesses und/oder gegenüber einem Satz von zu einem benutzerdefinierten Zeitpunkt gespeicherten Prozessgrößen (welche zeitlich natürlich konstant bleiben, bis sie geändert oder gelöscht werden, im Folgenden auch als Bezugswerte bezeichnet) erfolgt, bevorzugt gruppiert nach Prozessschritten. Die Visualisierung kann beispielsweise in Form einer Ampeldarstellung oder einer Zielscheiben-Darstellung erfolgen.

Dabei kann ein Vergleich der Prozessgrößen mit jenen des letzten Zyklus oder der letzten Zyklen z. B. so erfolgen, dass Drifts, Streuungen, Änderung von Streuungen etc. angezeigt werden. Es sind dafür keinerlei Benutzeraktionen erforderlich. Die überwachten Parameter und Überwachungsgrenzen sind werksseitig vordefiniert und/oder werden im Laufe der Produktion selbstständig erlernt. Anpassungen durch den Benutzer sind möglich, aber nicht erforderlich.

Ein Vergleich mit von zu einem benutzerdefinierten Zeitpunkt gespeicherten Prozessgrößen (Bezugswerten) kann z. B. so erfolgen: Um diesen Vergleich durchführen zu können, muss der Benutzer den aktuellen oder einen ausgewählten vorangegangenen Zyklus des Produktionsprozesses als Bezugszyklus festlegen. Der Bezugszyklus kann für alle Gruppen/Parameter oder für ausgewählte Gruppen/Parameter gesetzt werden. Alternativ dazu können Bezugswerte manuell eingegeben werden. Dem Benutzer kann vor dem Setzen eines Bezugswertes mitgeteilt werden, ob der Zeitpunkt dafür gerade günstig ist oder nicht. Ein Zeitpunkt ist dann günstig, wenn gerade keine Prozessveränderungen auf Basis vorangegangener Werte detektiert werden.

Bezugswerte können z. B. im Teiledatensatz der Produktionsanlage oder genauer der Formgebungsmaschine gespeichert werden, sodass sie beim nächsten Rüsten desselben Werkzeugs wieder eingelesen werden können.

Es kann vorgesehen sein, dass zusätzlich zur Visualisierung von Prozessveränderungen eine vorgenommene Sollwertänderung oder ein Anlagenstillstand durch Betriebsartwechsel visualisiert wird.

In Bezug auf die Visualisierung in einer Zielscheiben-Darstellung kann vorgesehen sein, dass jeder logischen zu visualisierenden logischen Gruppe ein Quadrant in jenem Koordinatenkreuz zugewiesen ist, in welchem die Zielscheibe visualisiert wird.

Bevorzugt ist vorgesehen, dass eine gemeinsame Darstellung der Abweichung von vorangegangenen und von als Bezug gespeicherte Werte in nachstehend beschriebener Form:
Die normierte Entfernung von Parametern von ihrem zugehörigen gespeicherten Wert wird in der Zielscheibe durch den Abstand vom Mittelpunkt symbolisiert.

Parameter, die vom gespeicherten Bezugswert abweichen, befinden sich je nach Ausmaß ihrer Abweichung mehr oder weniger weit vom Mittelpunkt entfernt. Wenn sie sich im Moment nicht verändern, werden sie als Punkte visualisiert. Falls sich die Parameter im Moment verändern, werden sie nicht als Punkte visualisiert, sondern als Pfeile und zwar in der Weise, dass die Richtung der Änderung relativ zum gespeicherten Bezugswert durch die Richtung des Pfeiles relativ zum Mittelpunkt visualisiert wird.

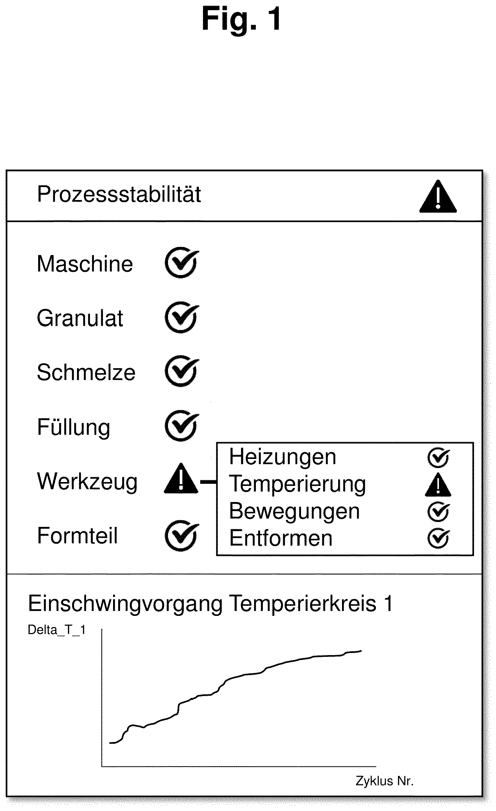

Erstes Ausführungsbeispiel der Erfindung (Figur 1) - Bestimmung und Visualisierung der Änderung des Wertes einer Prozessgröße gegenüber der jüngeren Vergangenheit:
Die Formgebungsmaschine ist als Kunststoff-Spritzgießmaschine ausgebildet.

Die nachfolgenden Ausführungen gelten aber gleichermaßen für andere Formen von Formgebungsmaschinen.

Das Visualisierungsprogramm ist hierarchisch aufgebaut. Die höchste Hierarchieebene beinhaltet die logische Gruppe "Prozessstabilität". Auf einer untergeordneten Hierarchieebene sind zur Beurteilung der Prozessstabilität die logischen Gruppen "Maschine", "Granulat", "Schmelze", "Füllung", "Werkzeug" und "Formteil" vorgesehen. Jeder logischen Gruppe dieser oberen Hierarchieebene ist auf der nächst niedrigeren Hierarchieebene zumindest eine andere logische Gruppe zugeordnet. Beispielsweise enthält hier die logische Gruppe "Werkzeug" die Untergruppen "Heizungen", "Temperierung", "Bewegungen" und "Entformen".

Der logischen Gruppe "Temperierung" ist unter anderem die Kennzahl Delta_T_1 zugeordnet. Der Wert beschreibt die Temperaturdifferenz zwischen Vor- und Rücklauf eines Temperiermedienkanals eines Werkzeugs. Diese Prozessgröße wird in jedem Arbeitszyklus (Zyklus Nr.) gemessen. Aus dem Vergleich des jeweils aktuellen Wertes mit den vorangegangenen Werten wird eine Steigung berechnet. Überschreitet die Steigung einen Referenzwert in Form eines hinterlegten Grenzwertes, so wird dies als Instabilität beurteilt und die logische Gruppe "Temperierung" mit einem warnenden Symbol (hier beispielhaft als Rufzeichen dargestellt) versehen. Da die logische Gruppe "Temperierung" eine Untergruppe der übergeordneten logischen Gruppe "Werkzeug" ist, erhält auch diese übergeordnete logische Gruppe das warnende Rufzeichen-Symbol. Die oberste Hierarchieebene ist enthält hier die logische Gruppe "Prozessstabilität", diese wird nun auch mit einem Rufzeichen markiert. Jene logischen Gruppen, die aufgrund der ihnen zugeordneten Prozessgrößen als für in Ordnung befunden wurden, sind mit einem Häkchen-Symbol markiert.

Auf diese Art und Weise können Veränderungen im Vergleich zur jüngeren Vergangenheit, wie z. B. Drifts, sprunghafte Änderungen oder zunehmende Streuungen beurteilt werden.

Im gezeigten Ausführungsbeispiel können zusätzlich zu den gezeigten Symbolen Häkchen und Rufzeichen auch Farbcodierungen vorgesehen, nämlich die Farbe Grün im Zusammenhang mit dem Häkchen und die Farbe Rot im Zusammenhang mit dem Rufzeichen. Die Farbcodierungen könnten auch alternativ zur Kennzeichnung mit Symbolen vorgesehen sein. Alternativ könnten nur Symbole, reine Texthinweise oder Symbole kombiniert mit Texthinweisen (ggf. mit zusätzlicher Farbcodierung) vorgesehen sein. Diese Ausführungen gelten allgemein für die Erfindung.

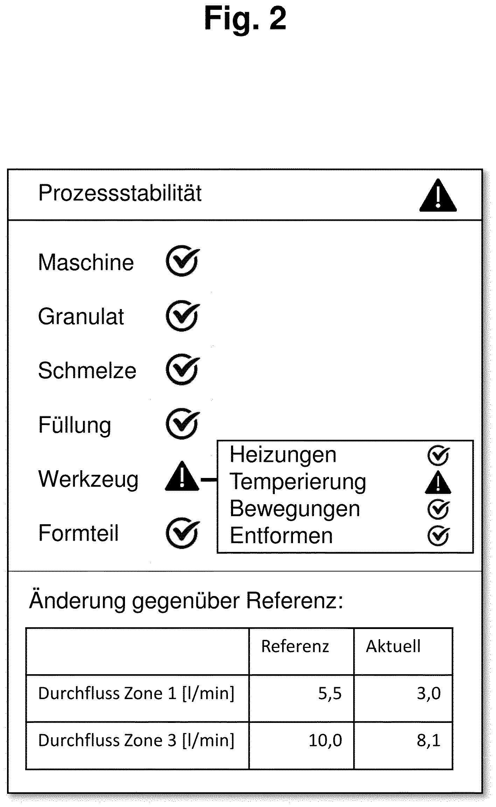

Zweites Ausführungsbeispiel der Erfindung (Figur 2) - Bestimmung und Visualisierung der Abweichung von einem Referenzwert:
Die Formgebungsmaschine ist als Kunststoff-Spritzgießmaschine ausgebildet.

Die nachfolgenden Ausführungen gelten aber gleichermaßen für andere Formen von Formgebungsmaschinen.

In diesem Ausführungsbeispiel erfolgt der Vergleich mit einem vom Bediener festgelegten Referenzzustand. Hier haben sich die Mediendurchflüsse in zwei Temperierkreisen geändert.

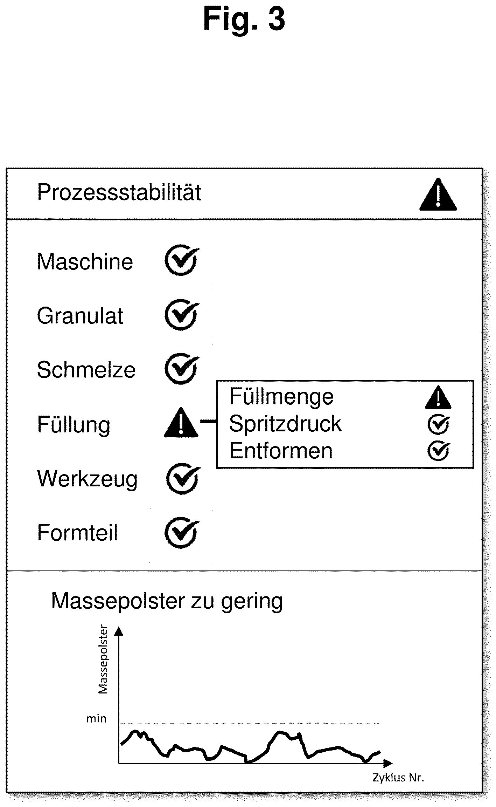

Drittes Ausführungsbeispiel der Erfindung (Figur 3) - Einsatz von Wissen eines Expertensystems:
Die Formgebungsmaschine ist als Kunststoff-Spritzgießmaschine ausgebildet.

Die nachfolgenden Ausführungen gelten aber gleichermaßen für andere Formen von Formgebungsmaschinen.

In diesem Ausführungsbeispiel wird die Prozessgröße "Massepolster" (= vorderste Schneckenposition während Einspritzen und Nachdruck) mit einem in Form von Wissen eines Expertensystems hinterlegten Mindestwert als Referenzwert verglichen und als zu gering eingestuft.

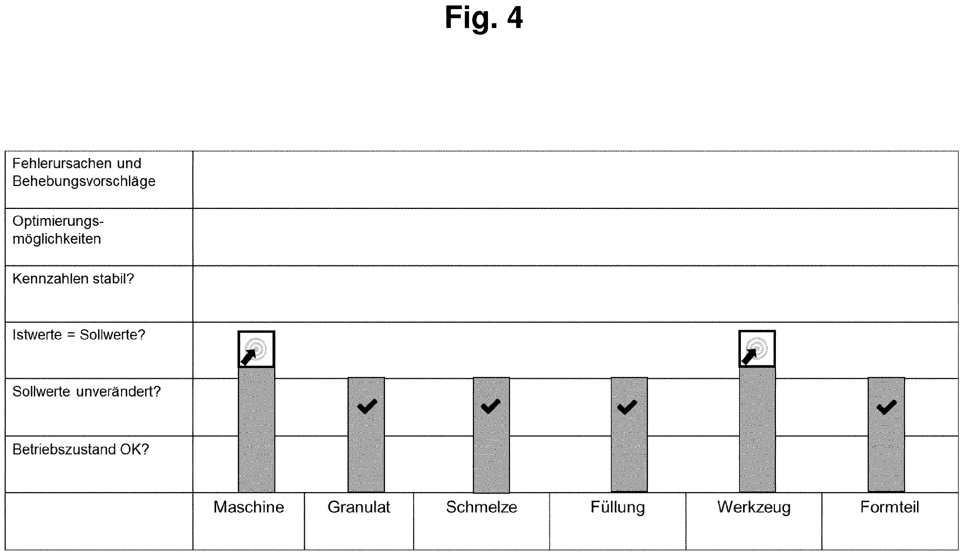

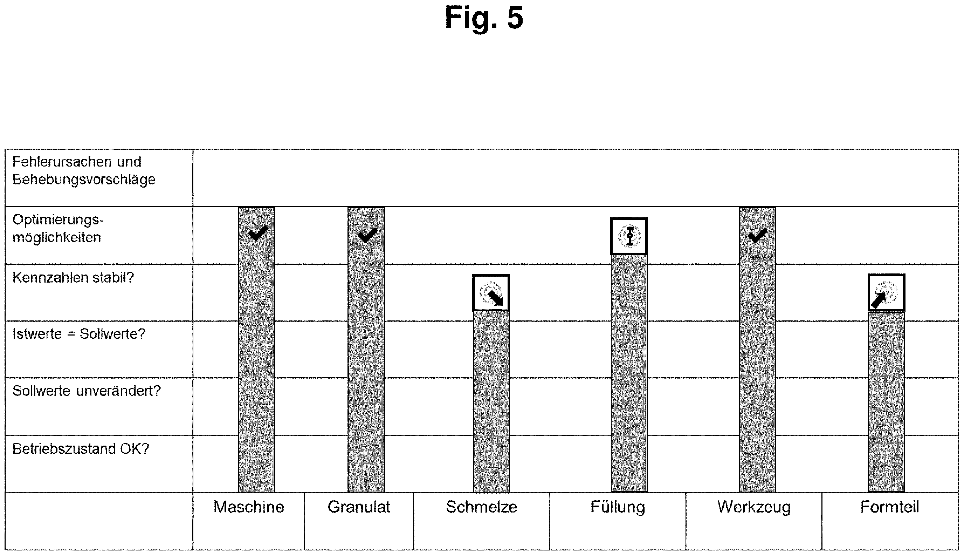

Viertes Ausführungsbeispiel der Erfindung (Figur 4 und 5) - Informationsfilterung mit Beobachtungsebenen:
Die Formgebungsmaschine ist als Kunststoff-Spritzgießmaschine ausgebildet.

Die nachfolgenden Ausführungen gelten aber gleichermaßen für andere Formen von Formgebungsmaschinen.

In Figur 4 sind von links nach rechts logische Gruppen ("Maschine", "Granulat", "Schmelze", "Füllung", "Werkzeug" und "Formteil") einer bestimmten Hierarchieebene aufgetragen, denen bestimmte Sollwerte, Istwerte, Zustandsvariablen und Kennzahlen zugeordnet sind. Von unten nach oben sind Beobachtungsebenen dargestellt, die hier der Reihe nach (von unten nach oben) beurteilt werden und verschiedene Prozesszustände des Produktionsprozesses oder der Produktionsanlage, welche für einen Bediener von Interesse sein können, beurteilen und visualisieren.

Figur 4 zeigt beispielhaft eine Situation vor Produktionsstart einer Kunststoff-Spritzgießmaschine. Die Heizungen sind eingeschaltet, die Soll-Temperaturen sind jedoch noch nicht erreicht. Die Temperatur-Istwerte von Maschine (Zylinderheizung) und Werkzeug bewegen sich in Richtung der Sollwerte. Erst wenn die Sollwerte erreicht sind, erfolgt der nächste Schritt der Beurteilung - die Stabilität der zugeordneten Prozessgrößen. Die logischen Gruppen "Granulat", "Schmelze", "Füllung" und "Formteil" können in diesem Zustand nur soweit beurteilt werden, dass die Sollwerte gegenüber einer Referenz nicht verändert wurden.

In Figur 5 ist ein möglicher Zustand während der Produktion (also zu einem späteren Zeitpunkt als in Figur 4) dargestellt. Eine oder mehrere Prozessgrößen, die für die Beurteilung der logischen Gruppe "Schmelze" geeignet sind, bewegen sich weg von jenem Wert, der zum Zeitpunkt der Festlegung des entsprechenden Referenzwertes festgestellt wurde.

Eine Prozessgröße, die zur Beurteilung der logischen Gruppe "Füllung" geeignet ist, weist verglichen mit der Referenz eine höhere Streuung auf. Eine Prozessgröße, die geeignet ist, die Qualität der logischen Gruppe "Formteil" zu beurteilen, driftet in Richtung des bei der Referenzierung gespeicherten Referenzwertes.

Die Formgebungsmaschine im fünften Ausführungsbeispiel der Erfindung (Figuren 6 - 9) ist als Kunststoff-Spritzgießmaschine ausgebildet. Die nachfolgenden Ausführungen gelten aber gleichermaßen für andere Formen von Formgebungsmaschinen.

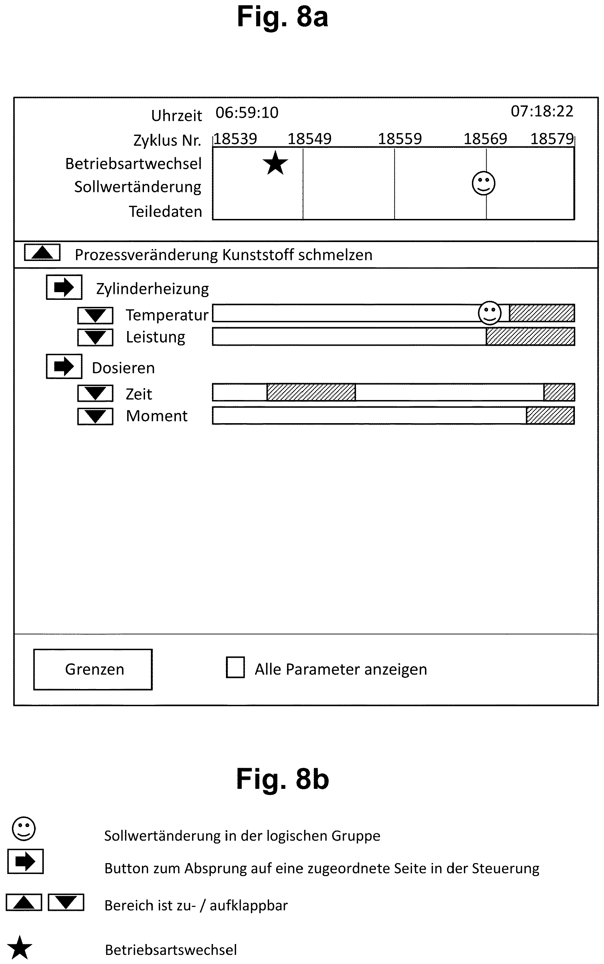

Im Ausführungsbeispiel der Fig. 6 ist eine Ampeldarstellung von Prozessveränderungen des letzten Zyklus gegenüber unmittelbar vorangegangenen (linke Darstellung) sowie gegenüber zu einem benutzerdefinierten Zeitpunkt gespeicherten Bezugswerten (rechte Darstellung) vorgesehen. Es werden sechs logische Gruppen beurteilt und visualisiert. Es erfolgt eine Gruppierung nach Prozessschritten (hier z. B. "Trocknen und Fördern", "Kunststoff schmelzen", "Form füllen", "Teil kühlen", "Form und Entnahme", "Qualitätsinspektion"). Über die Schaltflächen "Verlauf zeigen" kann jeweils ein zeitlicher Verlauf betrachtet werden (so wie in Fig. 8a dargestellt, man wechselt auf die entsprechende Seite). Im vorliegenden Beispiel gibt es in Bezug auf die ausgefüllt dargestellten Kreise (z. B. in gelber Farbe) Änderungen. Über die Schaltfläche "Einstellungen" können Darstellungsoptionen der Visualisierung gewählt werden. Es kann z. B. ausgewählt werden, wie viele vergangene Zyklen der Beurteilung und Visualisierung zugrunde gelegt werden sollen. Über die Schaltfläche "Signalisierung" kann der Benutzer eine Signalisierung (Alarmmeldung, Alarmlampe, SMS, e-mail, etc.) auswählen, für den Fall, dass zukünftig eine Prozessveränderung festgestellt wird. Über die Schaltfläche "Gespeicherte Werte" können jene Bezugswerte, welche dem auf der rechten Seite dargestellten Vergleich zugrunde liegen, eingegeben, geändert oder gelöscht werden. Über die in der Kopfzeile der Darstellung gezeigten Kästchen kann durch Setzen eines Hakens eine Auswahl der Visualisierungsoption getroffen werden (im vorliegenden Fall wurden beide Visualisierungsoptionen ausgewählt). Fig. 6 visualisiert, dass es in diesem Beispiel (nur) in Bezug auf die logische Gruppe "Kunststoff schmelzen" eine Abweichung von den vorangegangenen Werten gibt. Eine genauere Analyse steht dem Benutzer durch Wahl der Schaltfläche "Verlauf zeigen" zur Verfügung, mittels welcher er auf die in Fig. 8a gezeigte Seite wechselt.

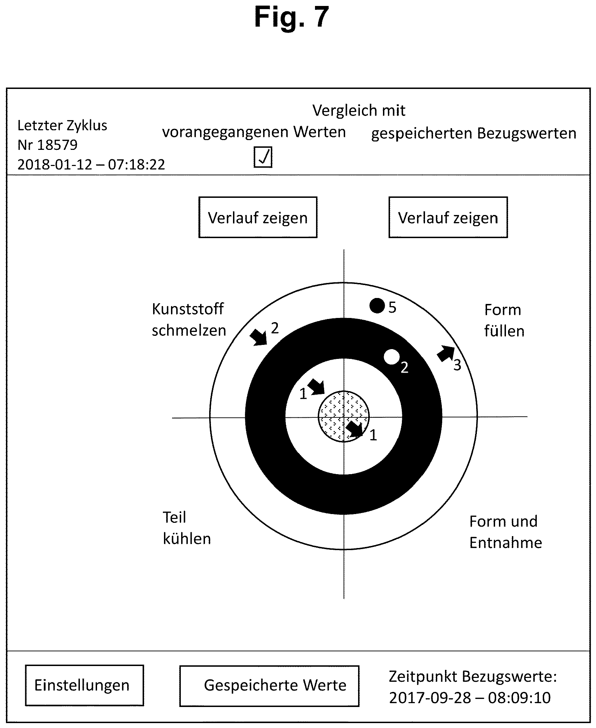

Im Ausführungsbeispiel der Fig. 7 wurde eine Zielscheiben-Darstellung von Prozessveränderungen des letzten Zyklus des Produktionsprozesses gegenüber vorangegangenen sowie gespeicherten Werten gewählt. Es werden vier logische Gruppen visualisiert, wobei jeder logischen Gruppe ein Quadrant im gezeigten Koordinatenkreuz zugewiesen ist.

Es erfolgt in diesem Beispiel eine optionale gemeinsame Darstellung der Abweichung von vorangegangenen und von als Bezug gespeicherte Werte in nachstehend beschriebener Form:
Die normierte Entfernung von Parametern von ihrem zugehörigen gespeicherten Wert wird in einer Zielscheibe durch den Abstand vom Mittelpunkt symbolisiert.

Parameter, die vom gespeicherten Bezugswert abweichen, befinden sich je nach Ausmaß ihrer Abweichung mehr oder weniger weit vom Mittelpunkt entfernt. Wenn sie sich im Moment nicht verändern, werden sie als Punkte visualisiert (in der Darstellung sind beispielhaft zwei solche Punkte zu sehen). Falls sich die Parameter im Moment verändern, werden sie nicht als Punkte visualisiert, sondern als Pfeile und zwar in der Weise, dass die Richtung der Änderung relativ zum gespeicherten Bezugswert durch die Richtung des Pfeiles relativ zum Mittelpunkt visualisiert wird (in der Darstellung sind beispielhaft vier solche Pfeile zu sehen).

Der Vergleich mit den vorangegangenen Werten erfolgt also derart, dass Parameter, welche als Punkte visualisiert werden, keine Abweichung von jenem Wert zeigen, den sie im vorherigen Zyklus oder in den vorhergehenden Zyklen hatten.

Eine werkseitig voreingestellte und/oder vorgebbare "Toleranz" legt fest, ab welcher Abweichung vom gespeicherten Bezugswert eine Visualisierung erfolgt.

Es erfolgte eine Darstellung von Aggregation und Ausmaß der Abweichung in der nachstehend beschriebenen Form:
Parameter, die weniger als eine zulässige Toleranz vom gespeicherten Bezugswert entfernt sind, befinden sich im innersten Kreis der Zielscheibe. Wenn sie im Zielbereich sind und sich nicht verändern, werden sie aus Gründen der Übersichtlichkeit nicht dargestellt. Jeder weitere Kreisring symbolisiert einen Abstand um die vorgegebene Toleranz. Befindet sich ein Parameter im äußeren weißen Ring, ist er also um das 3-4-fache außerhalb der Toleranz.

Statt jeden Parameter einzeln darzustellen, erfolgt in diesem Beispiel eine Aggregation in der nachstehend beschriebenen Art. Beim Prozessschritt "Form füllen" befinden sich z. B. 5 Parameter um das 3-4-fache außerhalb der Toleranz. Diese Werte sind stabil, verändern sich also im Moment nicht und werden daher als Punkt visualisiert. Weitere drei Parameter in diesem Kreissegment entfernen sich weiter von ihrem gespeicherten Bezugswert und werden daher als Pfeile mit Richtung vom Mittelpunkt weg visualisiert. Natürlich ist jede andere Art der Gruppierung möglich.

Durch Drücken einer der Buttons "Verlauf zeigen" gelangt man zu einer Verlaufsdarstellung über einen definierten Zeitraum oder eine definierte Anzahl von Zyklen.

In diesem Ausführungsbeispiel ist nur der Vergleich mit den vorangegangenen Werten abwählbar. In einem solchen Fall werden alle Parameter als Punkte visualisiert.

Im Ausführungsbeispiel der Fig. 8a erfolgt eine Verlaufsdarstellung ohne Kurven: Der Verlauf der Prozessänderung gegenüber vorangegangenen Werten wird über die letzten 40 Zyklen (natürlich könnte auch eine andere Zahl eingestellt werden) dargestellt. Ereignisse, die mehrere logische Gruppen betreffen können, sind im Header (in der gemeinsamen x-Achse) als Symbole dargestellt.

Es ist erkennbar, dass z. B. zwischen den Zyklen Nr. 18539 und Nr. 18549 ein Betriebsartwechsel stattgefunden hat (durch einen Stern visualisiert). Zwischen den Zyklen Nr. 18559 und Nr. 18569 hat der Benutzer eine Sollwertänderung vorgenommen (hier beispielhaft durch einen Smiley visualisiert).

Es erfolgt eine hierarchische logische Gruppierung nach: Prozessschritten - Funktionseinheit - physikalische Größe. Beispielhaft wird die Hierarchie für die Gruppe "Kunststoff schmelzen" (als Prozessschritt) gezeigt, mit den Untergruppen "Zylinderheizung" und "Dosieren" (als Funktionseinheiten) und den jeweiligen weiteren Untergruppen "Tempteratur" und "Leistung" bzw. "Zeit" und "Moment" (als physikalische Größe). Es ist erkennbar, dass die im Header gezeigte Sollwertänderung in Bezug auf eine Temperatur der Zylinderheizung vorgenommen wurde. Die schraffierten Bereiche in "Temperatur" und "Leistung" zeigen eine Alarmierung, welche sich aufgrund der vorgenommenen Änderung ergeben hat. Dasselbe gilt in Bezug auf die rechten Bereiche bei den Untergruppen "Zeit" und "Moment" der Untergruppe "Dosieren", während der linke schraffierte Bereich bei der Untergruppe "Zeit" eine Folge des Betriebsartwechsels ist.

Fig. 8b erläutert die Bedeutung der in Fig. 8a erkennbaren Symbole.

Es kann eine automatische Vorselektion vorgesehen sein:
Wechselt der Benutzer auf diese Seite, werden nur jene logischen Gruppen bzw.

Parameter angezeigt, die im eingestellten Beobachtungszeitraum (hier 40 Zyklen) eine Veränderung erfahren haben. Es erfolgt also eine automatische Vorselektion jener Informationen, die im Moment relevant sind. Durch Aktivieren der Funktion "Alle Parameter anzeigen" kann der Benutzer auch die im Beobachtungszeitraum stabilen Parameter betrachten.

Im Beispiel ist eine Prozessveränderung dargestellt. Dabei werden die Parameter in jedem Zyklus mit deren jüngsten Vergangenheit verglichen. Wenn sich z. B. eine Temperatur von 220 °C auf 230 °C verändert, wird dieser Übergangszeitraum bis zum Erreichen der neuen stabilen Temperatur gekennzeichnet.

Die Darstellung der Prozessveränderung gegenüber gespeicherten Bezugswerten würde ähnlich aussehen. Der Unterschied ist jedoch, dass die Markierung des Zeitbereichs erst dann endet, wenn der Zustand zum Zeitpunkt der benutzerdefinierten Speicherung wieder erreicht ist.

Über die Schaltfläche "Grenzen" können akzeptable Toleranzen eingestellt oder (falls sie werkseitig vordefiniert sind) verändert werden.

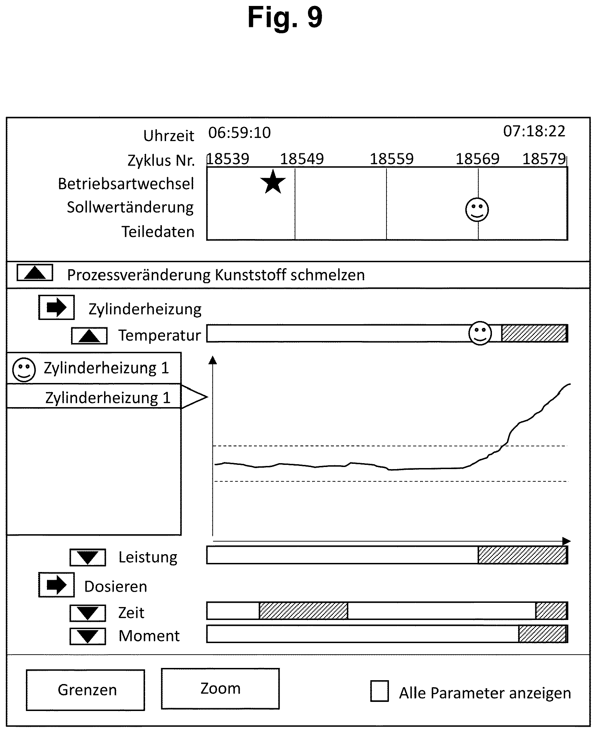

Das Ausführungsbeispiel der Fig. 9 zeigt eine Verlaufsdarstellung zur Fig. 8a mit aufgeklapptem Kurvenbereich der physikalischen Größe "Temperatur":
Es erfolgt eine Darstellung des Kurvenverlaufs mit strichliert eingezeichneten Toleranzen (Grenzen). Die Toleranzen sind werksseitig vordefiniert, können aber vom Benutzer geändert werden. Die Festlegung von Toleranzen kann für einzelne Parameter oder für Parametertypen (z. B. alle Temperaturen, alle Zylindertemperaturen, etc.) erfolgen.

Es kann eine Parameterauswahl in der Form vorgesehen sein, dass ein Set an zu überwachenden Parametern werksseitig vordefiniert ist, die Überwachung jedes Parameters kann aber vom Benutzer deaktiviert werden.

Die in den Figuren 6 bis 9 in Bezug auf ein Ausführungsbeispiel der Erfindung gezeigten Maßnahmen können auch einzeln oder in beliebiger Kombination vorgesehen sein.

In Bezug auf die oben diskutierten Ausführungsbeispiele einer Visualisierungsvorrichtung gilt, dass sie gleichermaßen in Bezug auf eine Beurteilungsvorrichtung gelten, wenn man die Visualisierung nicht als zwingend betrachtet.

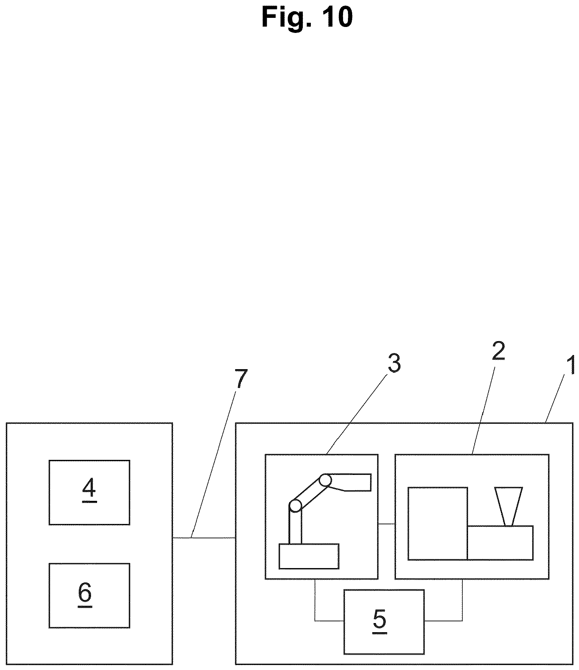

Fig. 10 zeigt schematisch eine Produktionsanlage 1 beinhaltend eine Formgebungsmaschine 2 und eine Handlingvorrichtung 3. Über eine Datenverbindung 7 sind zur Ausbildung der Beurteilungs- und/oder Visualisierungsvorrichtung eine Recheneinheit 4 und ein Speichermedium 6 mit einer Anzeigevorrichtung 5 verbunden.

Die Anzeigevorrichtung 5 kann beispielsweise in Form eines Bildschirms einer Maschinensteuerung der Formgebungsmaschine 2 und/oder in Form eines Web-Portals und/oder in Form einer an einem Körper tragbaren Visualisierungsvorrichtung (z. B. Handheld-Device wie Tablet oder VR-Brille) ausgebildet sein.

Die Recheneinheit 4 und das Speichermedium 6 könnten natürlich auch anders als dargestellt ein Teil der Formgebungsmaschine 2, beispielsweise ein Teil der Maschinensteuerung sein.

Im Speichermedium 6 ist ein Beurteilungsprogramm abgelegt, wobei durch das Beurteilungsprogramm verschiedene logische Gruppen bildbar sind und dass jede ausgewählte Prozessgröße zumindest einer der logischen Gruppen zugeordnet ist und für jede logische Gruppe ein Zustand der logischen Gruppe auf Basis der dieser logischen Gruppe zugeordneten Prozessgrößen beurteilbar ist.

Im Speichermedium 6 ist weiters ein Visualisierungsprogramm abgelegt, wobei durch das Visualisierungsprogramm verschiedene logische Gruppen visualisierbar sind und dass jede ausgewählte Prozessgröße zumindest einer der logischen Gruppen zugeordnet ist und für jede logische Gruppe ein Zustand der logischen Gruppe auf Basis der dieser logischen Gruppe zugeordneten Prozessgrößen durch die Anzeigevorrichtung 5 visualisierbar ist.

### Bezugszeichenliste und verwendete Terminologie:

- 1: Produktionsanlage
- 2: Formgebungsmaschine
- 3: Handlingvorrichtung
- 4: Recheneinheit
- 5: Anzeigevorrichtung
- 6: Speichermedium
- 7: Datenverbindung

- Messwert: von einem Sensor gelieferter Wert oder auf Basis der vom Sensor gelieferten Signale bestimmter Wert einer physikalischen Größe der Produktionsanlage, einer ihrer Komponenten oder des verarbeiteten Materials
- Prozessgröße: aus Messwert(en) ermittelte Größe, kann in Form einer oder mehrerer Kennzahlen dargestellt werden
- Kennzahl: aus Prozessgröße ermittelte Größe, wie zu. B. Eigenschaften von Messkurven; Zeitpunkt, bei dem Messgrößen bestimmten Werte einnimmt, usw.
- Sollwert: Einstellgröße für die Produktionsanlage
- Referenzwert: Wert, der zu einem Vergleich mit einer Prozessgröße herangezogen wird
- Referenzzustand: Kombination von Referenzwerten zu einem bestimmten Zeitpunkt, welcher den Zustand der Produktionsanlage oder von Teilen davon zu diesem Zeitpunkt charakterisiert
- Bezugswert: spezielle Form eines Referenzwerts, nämlich zu einem benutzerdefinierten Zeitpunkt gespeicherte Prozessgröße für den Vergleich mit einer oder mehreren Prozessgröße(n)
- Toleranz: Wert (z. B. in Form eines Bandes um eine Kurve), welcher angibt, ab welcher Abweichung eine Visualisierung und/oder Beurteilung erfolgt

## Patentansprüche

1. Visualisierungsvorrichtung für eine Produktionsanlage (1), die mindestens eine zyklisch arbeitende Formgebungsmaschine (2) enthält, zum Visualisieren eines Prozesszustandes der Produktionsanlage (1) mit:
- einer Anzeigevorrichtung (5) zur Anzeige eines in einem Speichermedium (6) abgelegten Visualisierungsprogramms
- einer Recheneinheit (4), welche mit der Anzeigevorrichtung und/oder dem Speichermedium in einer datenübertragenden Verbindung steht oder dazu konfiguriert ist, in eine datenübertragende Verbindung mit der Anzeigevorrichtung (5) und/oder dem Speichermedium (6) gebracht zu werden und die dazu konfiguriert ist, zeitkontinuierlich oder zeitdiskret den Wert einer Vielzahl von ausgewählten Prozessgrößen der Produktionsanlage (1) zu ermitteln und den jeweils aktuellen Wert jeder ausgewählten Prozessgröße oder eine daraus abgeleitete Größe mit einem oder mehreren Referenzwerten zu vergleichen und eine Abweichung oder eine Änderungsrate zu bestimmen
wobei vorzugsweise vorgesehen ist, dass das Visualisierungsprogramm dazu ausgebildet ist, jede ausgewählte Prozessgröße in Bezug auf deren Wert und/oder den durch die Recheneinheit (4) bestimmten Abweichungen oder Änderungsraten durch die Anzeigevorrichtung (5) zu visualisieren, **dadurch gekennzeichnet, dass**
- durch das Visualisierungsprogramm verschiedene logische Gruppen visualisierbar sind und dass jede ausgewählte Prozessgröße zumindest einer der logischen Gruppen zugeordnet ist, wobei
- logische Gruppen in wenigstens zwei Hierarchieebenen angeordnet sind, derart, dass zumindest eine logische Gruppe einer niedrigeren Hierarchieebene einer anderen logischen Gruppe einer höheren Hierarchieebene zugeordnet ist, und
- für jede logische Gruppe ein Zustand der logischen Gruppe auf Basis der dieser logischen Gruppe zugeordneten Prozessgrößen durch die Anzeigevorrichtung (5) visualisierbar ist.

2. Visualisierungsvorrichtung nach dem vorangehenden Anspruch zum Visualisieren eines Prozesszustandes der Produktionsanlage (1) zur Durchführung eines Verfahrens zum Beurteilen und Visualisieren eines Prozesszustandes einer Produktionsanlage (1), die mindestens eine zyklisch arbeitende Formgebungsmaschine (2) enthält, wobei zeitkontinuierlich oder zeitdiskret der Wert einer Vielzahl von ausgewählten Prozessgrößen ermittelt wird und der jeweils aktuelle Wert jeder ausgewählten Prozessgröße oder eine daraus abgeleitete Größe durch eine Recheneinheit (4) mit einem oder mehreren Referenzwerten verglichen und eine Abweichung oder eine Änderungsrate bestimmt wird, wobei
- jede ausgewählte Prozessgröße durch die Recheneinheit (4) wenigstens einer logischen Gruppe zugeordnet wird, wobei zumindest zwei verschiedene logische Gruppen vorgesehen werden, und dass
- gegebenenfalls logische Gruppen in wenigstens zwei Hierarchieebenen angeordnet werden, derart, dass zumindest eine logische Gruppe einer niedrigeren Hierarchieebene einer anderen logischen Gruppe einer höheren Hierarchieebene zugeordnet ist, und dass
- für jede logische Gruppe durch die Recheneinheit (4) ein Zustand der logischen Gruppe auf Basis der dieser logischen Gruppe zugeordneten Prozessgrößen beurteilt und/oder mittels einer Anzeigevorrichtung (5) visualisiert wird.

3. Beurteilungsvorrichtung für eine Produktionsanlage (1), die mindestens eine zyklisch arbeitende Formgebungsmaschine (2) enthält, zum Beurteilen eines Prozesszustandes der Produktionsanlage (1) mit:
- einem Speichermedium (6), in welchem ein Beurteilungsprogramm abgelegt ist
- einer Recheneinheit (4), welche mit dem Speichermedium (6) in datenübertragender Verbindung steht oder in eine solche bringbar ist und dazu konfiguriert ist, das Beurteilungsprogramm auszuführen wobei das Beurteilungsprogramm dazu ausgebildet ist, zeitkontinuierlich oder zeitdiskret den Wert einer Vielzahl von ausgewählten Prozessgrößen der Produktionsanlage (1) zu erhalten oder zu ermitteln und den jeweils aktuellen Wert jeder ausgewählten Prozessgröße oder eine daraus abgeleitete Größe mit einem oder mehreren Referenzwerten zu vergleichen und eine Abweichung oder eine Änderungsrate zu bestimmen und jede ausgewählte Prozessgröße in Bezug auf deren Wert und/oder den bestimmten Abweichungen oder Änderungsraten zu beurteilen,
**dadurch gekennzeichnet, dass**
- durch das Beurteilungsprogramm verschiedene logische Gruppen bildbar sind und dass jede ausgewählte Prozessgröße zumindest einer der logischen Gruppen zugeordnet ist, wobei
- logische Gruppen in wenigstens zwei Hierarchieebenen angeordnet sind, derart, dass zumindest eine logische Gruppe einer niedrigeren Hierarchieebene einer anderen logischen Gruppe einer höheren Hierarchieebene zugeordnet ist, und
- für jede logische Gruppe ein Zustand der logischen Gruppe auf Basis der dieser logischen Gruppe zugeordneten Prozessgrößen beurteilbar ist.

4. Beurteilungsvorrichtung nach dem vorangehenden Anspruch zum Beurteilen eines Prozesszustandes der Produktionsanlage (1) zur Durchführung eines Verfahrens zum Beurteilen und Visualisieren eines Prozesszustandes einer Produktionsanlage (1), die mindestens eine zyklisch arbeitende Formgebungsmaschine (2) enthält, wobei zeitkontinuierlich oder zeitdiskret der Wert einer Vielzahl von ausgewählten Prozessgrößen ermittelt wird und der jeweils aktuelle Wert jeder ausgewählten Prozessgröße oder eine daraus abgeleitete Größe durch eine Recheneinheit (4) mit einem oder mehreren Referenzwerten verglichen und eine Abweichung oder eine Änderungsrate bestimmt wird, wobei
- jede ausgewählte Prozessgröße durch die Recheneinheit (4) wenigstens einer logischen Gruppe zugeordnet wird, wobei zumindest zwei verschiedene logische Gruppen vorgesehen werden, und dass
- gegebenenfalls logische Gruppen in wenigstens zwei Hierarchieebenen angeordnet werden, derart, dass zumindest eine logische Gruppe einer niedrigeren Hierarchieebene einer anderen logischen Gruppe einer höheren Hierarchieebene zugeordnet ist, und dass
- für jede logische Gruppe durch die Recheneinheit (4) ein Zustand der logischen Gruppe auf Basis der dieser logischen Gruppe zugeordneten Prozessgrößen beurteilt und/oder mittels einer Anzeigevorrichtung (5) visualisiert wird.

5. Beurteilungs- oder Visualisierungsvorrichtung nach wenigstens einem der vorangehenden Ansprüche, wobei
- in einer, bevorzugt obersten, Hierarchieebene die logischen Gruppen in Bezug auf Prozessschritte des Produktionszyklus gewählt sind
- in einer unteren, bevorzugt nächstunteren, Hierarchieebene die logischen Gruppen nach Funktionseinheiten der Produktionsanlage (1) gewählt sind
- in einer weiter unteren, bevorzugt untersten, Hierarchieebene die logischen Gruppen nach physikalischen Größen gewählt sind

6. Beurteilungs- oder Visualisierungsvorrichtung nach wenigstens einem der vorangehenden Ansprüche, wobei die Beurteilung und/oder Visualisierung von Prozessveränderungen eines letzten Zyklus des Produktionsprozesses gegenüber einem oder mehreren vorangegangenen Zyklus bzw. Zyklen des Produktionsprozesses und/oder gegenüber einem Satz von zu einem benutzerdefinierten Zeitpunkt gespeicherten Prozessgrößen erfolgt, bevorzugt gruppiert nach Prozessschritten.

7. Beurteilungs- oder Visualisierungsvorrichtung nach wenigstens einem der vorangehenden Ansprüche, wobei zusätzlich zur Visualisierung von Prozessveränderungen eine vorgenommene Sollwertänderung oder ein Anlagenstillstand durch Betriebsartwechsel visualisierbar ist.

8. Produktionsanlage (1), die mindestens eine zyklisch arbeitende Formgebungsmaschine (2), vorzugsweise eine Kunststoff-Spritzgießmaschine, enthält und eine Beurteilungs- oder Visualisierungsvorrichtung nach wenigstens einem der vorangehenden Ansprüche aufweist oder die dazu ausgebildet ist, mit einer solchen in eine Datenverbindung (7) gebracht zu werden.

## Claims

1. A visualization device for a production installation (1), which contains at least one cyclically operating shaping machine (2) for visualizing a process state of the production installation (1) which contains:
- a display device (5) for displaying a visualization program stored in a memory device (6)
- a computing unit (4), which is in connection with the display device and/or with the memory device by way of a data connection or is configured such that it can be brought into data connection with the display device (5) and/or the memory device (6) and which is configured to ascertain continuously or in time-discrete relationship the value of a plurality of selected process variables of the production installation (1) and to compare the respective current value of each selected process variable or a variable derived therefrom to one or more reference values and to determine a deviation or a rate of change
wherein it is preferably provided that the visualization program is designed to visualize by the display device (5) each selected process variable with respect to its value and/or the deviations or rates of change determined by the computing unit (4),
**characterized in that**
- various logical groups can be visualized by means of the visualization program and that each selected process variable is associated with at least one logical group, wherein
- logical groups are arranged in at least two hierarchy levels in such a way that at least one logical group of a lower hierarchy level is associated with another logical group of a higher hierarchy level, and
- for each logical group a state of the logical group can be visualized by means of a display device (5) on the basis of the process variables associated with said logical group.

2. A visualization device according to the previous claim for visualizing a process state of the production installation (1) for carrying out a method for evaluating and visualizing a process state of a production installation (1) comprising at least one cyclically operating shaping machine (2), wherein continuously or in time-discrete relationship the value of a plurality of selected process variables is ascertained and the respective current value of each selected process variable or a variable derived therefrom is compared to one or more reference values by means of a computing unit (4) and a deviation or a rate of change is determined, wherein
- each selected process variable is associated with at least one logical group by the computing unit (4), wherein there are provided at least two different logical groups, and that
- where applicable, logical groups are arranged in at least two hierarchy levels in such a way that at least one logical group of a lower hierarchy level is associated with another logical group of a higher hierarchy level, and that
- for each logical group a state of the logical group is evaluated by the computing unit (4) on the basis of the process variables associated with said logical group and/or is visualised by means of a display device (5).

3. An evaluation device for a production installation (1) comprising at least one cyclically operating shaping machine (2) for evaluating a process state of the production installation (1) comprising:
- a memory device (6) in which an evaluation program is stored
- a computing unit (4) which is in connection with the memory device (6) by way of a data connection or can be brought into data connection and is configured to execute an evaluation program,
wherein the evaluation program is configured to receive or ascertain continuously or in time-discrete relationship the value of a plurality of selected process variables of the production installation (1) and to compare the respective current value of each selected process variable or a variable derived therefrom to one or more reference values and to determine a deviation or a rate of change and to evaluate each selected process variable with respect to its value and/or the determined deviations or rates of change,
**characterized in that**
- various logical groups can be visualized by means of the evaluation program and that each selected process variable is associated with at least one logical group, wherein
- logical groups are arranged in at least two hierarchy levels in such a way that at least one logical group of a lower hierarchy level is associated with another logical group of a higher hierarchy level, and
- for each logical group a state of the logical group can be evaluated by means of a display device (5) on the basis of the process variables associated with said logical group.

4. An evaluation device according to the previous claim for evaluating a process state of the production installation (1) for carrying out a method for evaluating and visualizing a process state of a production installation (1) comprising at least one cyclically operating shaping machine (2), wherein continuously or in time-discrete relationship the value of a plurality of selected process variables is ascertained and the respective current value of each selected process variable or a variable derived therefrom is compared to one or more reference values by means of a computing unit (4) and a deviation or a rate of change is determined, wherein
- each selected process variable is associated with at least one logical group by the computing unit (4), wherein there are provided at least two different logical groups, and that
- where applicable, logical groups are arranged in at least two hierarchy levels in such a way that at least one logical group of a lower hierarchy level is associated with another logical group of a higher hierarchy level, and that
- for each logical group a state of the logical group is evaluated by the computing unit (4) on the basis of the process variables associated with said logical group and/or is visualised by means of a display device (5).

5. An evaluation or visualization device according to at least one of the previous claims, wherein
- in a preferably, uppermost, hierarchy level the logical groups are selected in relation to process steps in the production cycle,
- in a lower preferably, next lower, hierarchy level the logical groups are selected in accordance with function units of the production installation (1), and
- in a further lower, preferably lowermost, hierarchy level the logical groups are selected in accordance with physical parameters.

6. An evaluation or visualization device according to at least one of the previous claims, wherein the evaluation and/or visualisation of process alterations of a last cycle of the production process is effected in relation to one or more preceding cycles of the production process and/or in relation to a set of process variables stored at a user-defined time, preferably grouped according to process steps.

7. An evaluation or visualization device according to at least one of the previous claims, wherein in addition to the visualisation of process alterations a change in target value effected or an installation stoppage due to a change in operating mode can be visualised.

8. A production installation (1) comprising at least one cyclically operating shaping machine (2), preferably a plastic injection moulding machine, and an evaluation or visualization device according to at least one of the preceding claims or is configured such that it can be brought into a data connection (7) with the same.

## Revendications

1. Dispositif de visualisation pour une installation de production (1), qui contient au moins une machine de formage (2) fonctionnant de manière cyclique, pour la visualisation d'un état de processus de l'installation de production (1) avec :
- un dispositif d'affichage (5) pour l'affichage d'un programme de visualisation mis en mémoire dans un support d'enregistrement (6)
- une unité de calcul (4), laquelle est dans une liaison de transmission de données avec le dispositif d'affichage et/ou le support d'enregistrement ou configurée pour être amenée dans une liaison de transmission de données avec le dispositif d'affichage (5) et/ou le support d'enregistrement (6) et qui est configurée pour établir de manière continue dans le temps ou de manière discrète dans le temps la valeur d'une pluralité de grandeurs de processus sélectionnées de l'installation de production (1) et pour comparer la valeur respectivement actuelle de chaque grandeur de processus sélectionnée ou une grandeur déduite de celle-ci à une ou plusieurs valeurs de référence et pour déterminer un écart ou un taux de modification
dans lequel il est prévu de préférence que le programme de visualisation soit réalisé pour visualiser chaque grandeur de processus sélectionnée par rapport à la valeur de celle-ci et/ou aux écarts ou taux de modification déterminés par l'unité de calcul (4) par le dispositif d'affichage (5),
**caractérisé en ce que**
- des groupes logiques différents peuvent être visualisés par le programme de visualisation et que chaque grandeur de processus sélectionnée est associée à au moins un des groupes logiques, dans lequel
- des groupes logiques sont disposés en au moins deux niveaux hiérarchiques de telle sorte qu'au moins un groupe logique d'un niveau hiérarchique plus bas est associé à un autre groupe logique d'un niveau hiérarchique plus haut, et
- pour chaque groupe logique un état du groupe logique peut être visualisé par le dispositif d'affichage (5) sur la base des grandeurs de processus associées à ce groupe logique.

2. Dispositif de visualisation selon la revendication précédente pour la visualisation d'un état de processus de l'installation de production (1) pour la mise en œuvre d'un procédé pour évaluer et visualiser un état de processus d'une installation de production (1), qui contient au moins une machine de formage (2) fonctionnant de manière cyclique, dans lequel la valeur d'une pluralité de grandeurs de processus sélectionnées est établie de manière continue dans le temps ou discrète dans le temps et la valeur respectivement actuelle de chaque grandeur de processus sélectionnée ou une grandeur déduite de celle-ci est comparée par une unité de calcul (4) à une ou plusieurs valeurs de référence et un écart ou un taux de modification est déterminé, dans lequel
- chaque grandeur de processus sélectionnée est associée par l'unité de calcul (4) à au moins un groupe logique, dans lequel au moins deux groupes logiques différents sont prévus, et que
- éventuellement des groupes logiques sont disposés en au moins deux niveaux hiérarchiques, de telle sorte qu'au moins un groupe logique d'un niveau hiérarchique plus bas est associé à un autre groupe logique d'un niveau hiérarchique plus haut, et que
- pour chaque groupe logique un état du groupe logique est évalué par l'unité de calcul (4) sur la base des grandeurs de processus associées à ce groupe logique et/ou visualisé au moyen d'un dispositif d'affichage (5).

3. Dispositif d'évaluation pour une installation de production (1), qui contient au moins une machine de formage (2) fonctionnant de manière cyclique, pour évaluer un état de processus de l'installation de production (1) avec :
- un support d'enregistrement (6), dans lequel un programme d'évaluation est mis en mémoire
- une unité de calcul (4), laquelle est en liaison de transmission de données avec le support d'enregistrement (6) ou peut être amenée dans celle-ci et est configurée pour exécuter le programme d'évaluation
dans lequel le programme d'évaluation est réalisé pour obtenir ou pour établir de manière continue dans le temps ou de manière discrète dans le temps la valeur d'une pluralité de grandeurs de processus sélectionnées de l'installation de production (1) et pour comparer la valeur respectivement actuelle de chaque grandeur de processus sélectionnée ou une grandeur déduite de celle-ci à une ou plusieurs valeurs de référence et pour déterminer un écart ou un taux de modification et pour évaluer chaque grandeur de processus sélectionnée par rapport à la valeur de celle-ci et/ou aux écarts ou taux de modification déterminés,
**caractérisé en ce que**
- différents groupes logiques peuvent être formés par le programme d'évaluation et que chaque grandeur de processus sélectionnée est associée à au moins un des groupes logiques, dans lequel
- les groupes logiques sont disposés en au moins deux niveaux hiérarchiques de telle sorte qu'au moins un groupe logique d'un niveau hiérarchique plus bas est associé à un autre groupe logique d'un niveau hiérarchique plus haut, et
- pour chaque groupe logique un état du groupe logique peut être évalué sur la base des grandeurs de processus associées à ce groupe logique.

4. Dispositif d'évaluation selon la revendication précédente pour évaluer un état de processus de l'installation de production (1) pour la mise en œuvre d'un procédé pour évaluer et visualiser un état de processus d'une installation de production (1), qui contient au moins une machine de formage (2) fonctionnant de manière cyclique, dans lequel la valeur d'une pluralité de grandeurs de processus sélectionnées est établie de manière continue dans le temps ou de manière discrète dans le temps et la valeur respectivement actuelle de chaque grandeur de processus sélectionnée ou une grandeur déduite de celle-ci est comparée par une unité de calcul (4) à une ou plusieurs valeurs de référence et un écart ou un taux de modification est déterminé, dans lequel
- chaque grandeur de processus sélectionnée est associée par l'unité de calcul (4) à au moins un groupe logique, dans lequel au moins deux groupes logiques différents sont prévus, et que
- des groupes logiques sont éventuellement disposés en au moins deux niveaux hiérarchiques, de telle sorte qu'au moins un groupe logique d'un niveau hiérarchique plus bas est associé à un autre groupe logique d'un niveau hiérarchique plus haut, et que
- pour chaque groupe logique un état du groupe logique est évalué par l'unité de calcul (4) sur la base des grandeurs de processus associées à ce groupe logique et/ou visualisé au moyen d'un dispositif d'affichage (5).

5. Dispositif d'évaluation ou de visualisation selon au moins l'une des revendications précédentes, dans lequel
- dans un niveau hiérarchique, de préférence le plus haut, les groupes logiques sont sélectionnés par rapport aux étapes de processus du cycle de production
- dans un niveau hiérarchique inférieur, de préférence le plus bas, les groupes logiques sont sélectionnés selon des unités fonctionnelles de l'installation de production (1)
- dans un autre niveau hiérarchique inférieur, de préférence le plus bas, les groupes logiques sont sélectionnés selon des grandeurs physiques.

6. Dispositif d'évaluation ou de visualisation selon au moins l'une des revendications précédentes, dans lequel l'évaluation et/ou la visualisation de modifications de processus d'un dernier cycle du processus de production s'effectue par rapport à un ou plusieurs cycle ou cycles précédent(s) du processus de production et/ou par rapport à un groupe de grandeurs de processus mises en mémoire à un moment défini par l'utilisateur, de préférence de manière groupée selon des étapes de processus.

7. Dispositif d'évaluation ou de visualisation selon au moins l'une des revendications précédentes, dans lequel en plus de la visualisation de modifications de processus une modification de valeur théorique réalisée ou un arrêt de l'installation peut être visualisé par des changements de mode de fonctionnement.

8. Installation de production (1), qui contient au moins une machine de formage (2) fonctionnant de manière cyclique, de préférence une machine de moulage par injection de matière plastique, et présente un dispositif d'évaluation ou de visualisation selon au moins l'une des revendications précédentes ou qui est réalisée pour être amenée dans une liaison de données (7) avec une telle machine.
